(19) Europäisches Patentamt
European Patent Office
Office européen des brevets

(11) **EP 4 057 063 A1**

(12) **EUROPEAN PATENT APPLICATION**
published in accordance with Art. 153(4) EPC

(43) Date of publication:
**14.09.2022 Bulletin 2022/37**

(21) Application number: **20884334.2**

(22) Date of filing: **04.11.2020**

(51) International Patent Classification (IPC):
***G03B 35/16*** (2021.01)   ***G02F 1/13*** (2006.01)

(52) Cooperative Patent Classification (CPC):
**G02B 30/25; G02F 1/13; G02F 1/133;
G02F 1/1333; G02F 1/1335; G03B 35/16**

(86) International application number:
**PCT/CN2020/126572**

(87) International publication number:
**WO 2021/088895 (14.05.2021 Gazette 2021/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.11.2019 CN 201921881550 U**

(71) Applicant: **Shenzhen Time Waying Technology
Co., Ltd.
Shenzhen, Guangdong 518000 (CN)**

(72) Inventor: **LI, Yanlong
Shenzhen, Guangdong 518000 (CN)**

(74) Representative: **Zenz Patentanwälte
Partnerschaft mbB
Gutenbergstraße 39
45128 Essen (DE)**

(54) **QUICK-RESPONSE LIQUID CRYSTAL PHASE MODULATION DEVICE AND DRIVING METHOD THEREFOR, AND 3D PROJECTION LIGHT MODULATION SYSTEM**

(57)    Provided are a quick-response liquid crystal phase modulation device and a driving method thereof, and a 3D projection light modulation system. The liquid crystal phase modulation device includes a first optical self-compensated bend liquid crystal device (2) and a second optical self-compensated bend liquid crystal device (3) attached sequentially, and a driving circuit (4) connected to the first optical self-compensated bend liquid crystal device (2) and the second optical self-compensated bend liquid crystal device (3). When a high voltage (VH) is converted into a low voltage (VL), the driving circuit (4) drives the liquid crystal phase modulation device through a reverse voltage opposite to the specified high voltage (VH) and a zero voltage, to accelerate a discharge rate of materials on both sides of a liquid crystal layer, so that liquid crystal molecules have an accelerated relaxation from a field-induced nematic phase state to a bend state, thereby shortening an optical response duration of the liquid crystal molecules and thus increasing an optical response speed. When applied to the liquid crystal modulator for digital 3D movie projection, it can reduce image crosstalk and increase screen brightness.

FIG. 1

**Description**

**TECHNICAL FIELD**

The present invention relates to the application field of liquid crystal optics, and in particular to a quick-response liquid crystal phase modulation device, a driving method thereof, and a 3d projection light modulation system.

**BACKGROUND**

Optical self-compensated bend (OCB) mode liquid crystal devices, also known as pi-cells, are commonly applied in various fields as phase dynamic modulation devices. Compared with other types of liquid crystal display modes, except ferroelectric liquid crystals, the liquid crystal devices in the OCB mode have a fastest response speed.

In the digital cinema 3D industry, a double-layer OCB liquid crystal is usually used as a dynamic phase modulation, synchronizes with an image output of a digital projector, respectively outputs left-circularly polarized light and right-circularly polarized light in the form of timing sequence, and implements 3D projection display in conjunction with circularly polarized 3D glasses. In order to solve a smearing phenomenon of high-speed motion pictures, high-frame-rate movie-taking and image-restoring techniques are beginning to be applied successively to cinemas. High-frame-rate 3D movies place higher demands on 3D devices, when 3D films with 60 and 120 frames is played, the response speed of the original 3D devise would cause the problems of severe ghosting and decreasing brightness.

**SUMMARY**

The technical problem to be solved by the present invention is how to improve the response speed of a liquid crystal phase modulation device, so as to reduce image crosstalk and increase screen brightness when the liquid crystal phase modulation device is applied in the field of 3D projection.

In order to solve the above technical problem, in a first aspect, the present invention provides a quick-response liquid crystal phase modulation device including a first optical self-compensated bend liquid crystal device and a second optical self-compensated bend liquid crystal device attached one another; the quick-response liquid crystal phase modulation device further includes a driving circuit connected to the first optical self-compensated bend liquid crystal device and the second optical self-compensated bend liquid crystal device; liquid crystal material of each of the first optical self-compensated bend liquid crystal device and the second optical self-compensated bend liquid crystal device is switched circularly among a first delay stage corresponding to a specified high voltage, a second delay stage corresponding to a reverse voltage of the specified high voltage, a third delay stage corresponding to zero voltage, and a fourth delay stage corresponding to a specified low voltage under driving of the driving circuit, wherein a delay amount increases gradually during a process from the first delay stage to the fourth delay stage.

In a second aspect, the present invention also provides a 3D projection light modulation system, including:

a polarization beam splitting component, configured to perform polarization beam splitting on a left eye beam and a right eye beam which are projected alternately, to obtain at least two split light beams, one part of the at least two split light beams having a first linear polarization state, and the other part having a second linear polarization state; wherein the left eye beam carries a left eye image information, and the right eye beam carries a right eye image information;

a polarization plane rotating component, arranged on a light-emergent side of the polarization beam splitting component, and configured to adjust the at least two split beam to have uniform linear polarization states;

an optical path direction adjusting component, arranged on a light-emergent side of the polarization beam splitting component, and configured to cause the at least two split beams to propagate towards a projection screen by adjusting a propagation direction; and

the quick-response liquid crystal phase modulation device according to the first aspect, which is arranged on a light-emergent side of the polarization beam splitting component, and configured to adjust the at least two split beams in two adjacent timing sequences to circularly polarized light rotating in a first direction and circularly polarized light rotated in a second direction alternately.

In a third aspect, the present invention also provides a driving method for the quick-response liquid crystal phase modulation device according to the first aspect, the method comprising simultaneously driving the first optical self-compensated bend liquid crystal device and the second optical self-compensated bend liquid crystal device, in particular including:

driving the first optical self-compensated bend liquid crystal device to switch circularly among a first delay stage corresponding to a specified high voltage, a second delay stage corresponding to a reverse voltage of the specified high voltage, a third delay stage corresponding to zero voltage, and a fourth delay stage corresponding to a specified low voltage, by using the driving circuit;

driving the second optical self-compensated bend liquid crystal device to switch circularly among the second delay stage corresponding to a reverse voltage of the specified high voltage, the third delay stage corresponding to zero voltage, the fourth delay stage corresponding to a specified low voltage, and the first delay stage corresponding to a specified high voltage, by using the driving circuit;

wherein a duration of the first delay stage is equal to a sum of the durations of the second delay stage, the third delay stage and the fourth delay stage, when one of the first optical self-compensated bend liquid crystal device and the second optical self-compensated bend liquid crystal device is in the first delay stage, the other undergoes the second delay stage, the third delay stage and the fourth delay stage in sequence; a delay amount increases gradually during a switching process from the first delay stage to the fourth delay stage.

The present invention optimizes the charge and discharge process of the liquid crystal phase modulation device, When switched from a high voltage to a low voltage for discharge, the liquid crystal phase modulation device is driven by a reverse voltage opposite to the specified high voltage and a zero voltage, to accelerate a discharge rate of materials on both sides of a liquid crystal layer, so that liquid crystal molecules have an accelerated relaxation from a field-induced nematic phase state to a bend state, thereby shortening an optical response duration of the liquid crystal molecules and thus increasing an optical response speed. When applied to the liquid crystal modulator for digital 3D movie projection, it can reduce image crosstalk and increase screen brightness.

## BRIEF DESCRIPTION OF THE DRAWINGS

FIG. 1 is a structural view of a quick-response liquid crystal phase modulation device according to a first embodiment of the present invention;

FIG. 2 is a schematic view illustrating an arrangement of liquid crystal molecules in an OCB mode liquid crystal device according to a first embodiment of the present invention at different voltages;

FIG. 3 is a graph of driving waveforms of a first driving circuit driving a first optical self-compensated bend liquid crystal device and a second optical self-compensated bend liquid crystal device according to a first embodiment of the present invention;

FIG. 4A is a graph of optical response curves using the first driving waveform according to the first embodiment of the present invention;

FIG. 4B is a graph of optical response curves after employing a driving waveform without reverse charge phase and zero potential phase;

FIG. 5 is a graph of driving waveforms of a second driving circuit driving the first optical self-compensated bend liquid crystal device and the second optical self-compensated bend liquid crystal device according to the first embodiment of the present invention;

FIG. 6 is a graph of driving waveforms of a third driving circuit driving the first optical self-compensated bend liquid crystal device and the second optical self-compensated bend liquid crystal device according to the first embodiment of the present invention;

Fig. 7 is a structural view of a 3D projection light modulation system according to a second embodiment of the present invention;

FIG. 8 is a flow chart of a driving method for a quick-response liquid crystal phase modulation device of the first embodiment according to a third embodiment of the present invention.

## DETAILED DESCRIPTION OF THE EMBODIMENTS

In order to make the objectives, technical solutions and advantages of the present invention more apparent, the present invention will be described in further detail hereinafter with reference to the accompanying drawings and examples. It should be understood that the specific embodiments described herein are merely illustrative of the invention and are not intended to limit the invention.

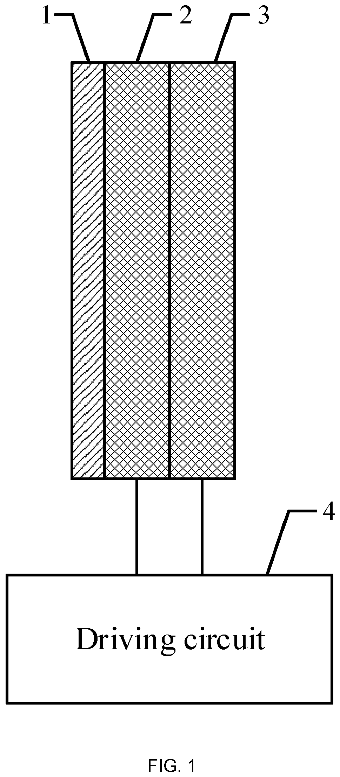

Referring to FIG. 1, the quick-response liquid crystal phase modulation device provided by the first embodiment of the present invention includes a linearly polarized device 1, a first optical self-compensated bend liquid crystal device 2, a second optical self-compensated bend liquid crystal device 3, and a driving circuit 4 attached sequentially. The linearly polarized device 1 only allows the passage of light polarized in a specified direction. When the light entering the linearly polarized device 1 is unpolarized light, the linearly polarized device 1 acts as a "polarizing" device, and converts the unpolarized light into polarized light. When the light entering the linearly polarized device 1 is linearly polarized light, at this time, the function of linear polarization device 1 is reflected as "filtering and purifying", to filter out stray light so that the linearly polarized light transmitted through the linearly polarized device 1 is more pure. The linearly polarized device 1 may be omitted if the linearly polarized light received by the first optical self-compensated bend liquid crystal device 2 meets the requirement.

The Driving circuit 4 is connected with the first optical self-compensated bend liquid crystal device 2 and the second optical self-compensated bend liquid crystal device 3, and is configured to drive the first optical self-compensated bend liquid crystal device 2 and the second optical self-compensated bend liquid crystal device 3. In order to avoid electrolysis of the liquid crystal material under a direct current field, the driving circuit 4 drives the first optical self-compensated bend liquid crystal device 2 and the second optical self-compensated bend liquid crystal device 3 with an alternating current.

A first angle is defined between a long axis projection direction of liquid crystal molecules in the first optical self-compensated bend liquid crystal device 2 and an absorption axis direction of the linearly polarized device 1. A second angle is defined between the long axis projection direction of liquid crystal molecules in the second optical self-compensated bend liquid crystal device 3 and the absorption axis direction of the linearly polarized device 1. The light parallel to the absorption axis in the incident light will be absorbed by the linearly polarized device 1. One of the first angle and the second angle is positive 45 degrees and the other is negative 45 degrees, that is, it is possible that the first angle is positive 45 degrees and the second angle is negative 45 degrees, or it is possible that the first angle is negative 45 degrees and the second angle is positive 45 degrees.

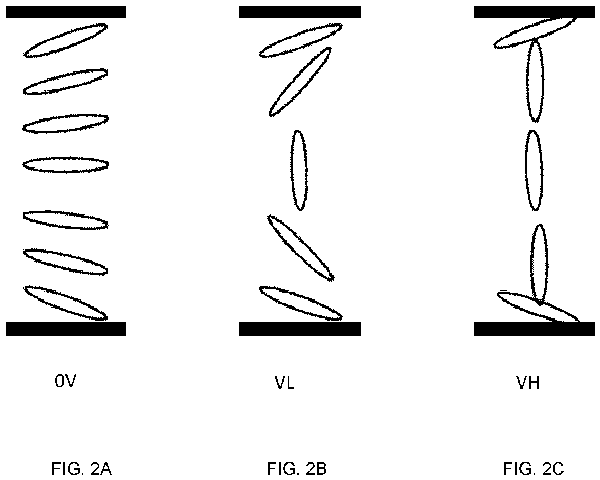

As for the first optical self-compensated bend liquid crystal device 2 and the second optical self-compensated bend liquid crystal device 3, the liquid crystal molecules may be arranged in three states: when no voltage is applied, the liquid crystal molecules on a upper substrate and a lower substrate are arranged in parallel to the substrate surfaces and oppositely arranged, which is called a splay state, as shown in FIG. 2A. When driven by a low voltage VL, the liquid crystal molecules in a liquid crystal cell are in a bend arrangement, which is called a bend state, as shown in FIG. 2B. When driven by a high voltage VH, the liquid crystal molecules are arranged perpendicular to the substrates, which is called a field-induced nematic phase, as shown in FIG. 2C.

Both of the first optical self-compensated bend liquid crystal device 2 and the second optical self-compensated bend liquid crystal device 3 can be regarded as plate capacitors with a liquid crystal layer sandwiched between two plate electrodes. A capacitance value of a liquid crystal device can be calculated according to the formula of the plate capacitor:

$$C = \frac{\varepsilon_0 \times \varepsilon_r \times S}{d}$$

Where $\varepsilon_0$ is a vacuum dielectric constant, $\varepsilon_r$ is a relative dielectric constant of dielectric in the plate capacitor, S is a relative area of the electrode, and d is an electrode spacing. The charging and discharging time of a capacitor is related to its capacitance value and a resistance value R in a circuit. Generally, the capacitor charging and discharging time constant $t_c = RC$, represents the time it takes for the voltage at both ends of the capacitor structure to reach 0.63 times of the maximum value $V_u$. When a charging time $t = RC$, $V_t = 0.63 V_u$; When the charging time $t = 2RC$, $V_t = 0.86\ V_u$; When the charging time $t = 3RC$, $V_t = 0.95\ V_u$, when the charging time $t = 4RC$, $V_t = 0.98\ V_u$; it is generally considered that the capacitor is fully charged at $t = 5RC$.

A liquid crystal response speed is related not only to the liquid crystal material itself, but also to electric field intensity and a speed of electric field establishment. The liquid crystal response speed can be divided into a rising time and a falling time, wherein the rising time represents a response time of the liquid crystal when the liquid crystal is switched from a low voltage to a high voltage; the falling time is the response time when the liquid crystal is switched from a high voltage to a low voltage (including the voltage of 0V).

For the rising time, i.e., the time when the liquid crystal device is switched from a low voltage or 0 V voltage to a high voltage state, under the condition that the thickness of the liquid crystal layer is constant, a liquid crystal molecular kinetic response time is positively correlated with a voltage applied on an upper side and a lower side of the liquid crystal layer, the higher the voltage is, the faster the liquid crystal molecules rotate; therefore, the rising time of the liquid crystal device can be improved simply by increasing the output voltage of the driving circuit.

For the falling time, i.e., the time when the liquid crystal device is switched from a high-voltage to a low-voltage state, the liquid crystal molecular kinetic response time is related to not only to factors such as elastic constant, viscosity coefficient, temperature, and the like of the liquid crystal material, but also to factors such as charge release rate, potential difference and the like on the upper and lower sides of the liquid crystal layer. In order to accelerate a charge release speed on both sides of the liquid crystal layer, a reverse charging stage (or discharge stage) and a zero potential stage are added in the driving process of the driving circuit 4 in the first embodiment of the invention.

In particular, driven by the driving circuit 4, liquid crystal materials in the first optical self-compensated bend liquid crystal device 2 and the second optical self-compensated bend liquid crystal device 3 are each cyclically switchable among a first delay stage corresponding to a specified high voltage, a second delay stage corresponding to a reverse voltage of the specified high voltage, a third delay stage corresponding to zero voltage, and a fourth delay stage corresponding to a specified low voltage. the arrangements of the liquid crystal material is are different at different delay stages. A delay amount increases gradually during a switching process from the first delay stage to the fourth delay stage. A duration of the first delay stage is equal to a sum of the durations of the second delay stage, the third delay stage and the fourth delay stage. When both driven, one of the first optical self-compensated bend liquid crystal device 2 and the second optical self-compensated bend liquid crystal device 3 is in the first delay stage, the other undergoes the second delay stage, the third delay stage and the fourth delay stage in sequence.

In the first delay stage, the first optical self-compensated bend liquid crystal device 2 and the second optical self-compensated bend liquid crystal device 3 have a retardation in proximity to zero, in the range of about 0-30 nm. In the fourth delay stage, the retardations of the first optical self-compensated bend liquid crystal device 2 and the second optical self-compensated bend liquid crystal device 3 are in proximity to a quarter of a wavelength, in the range of about 100-150 nm.

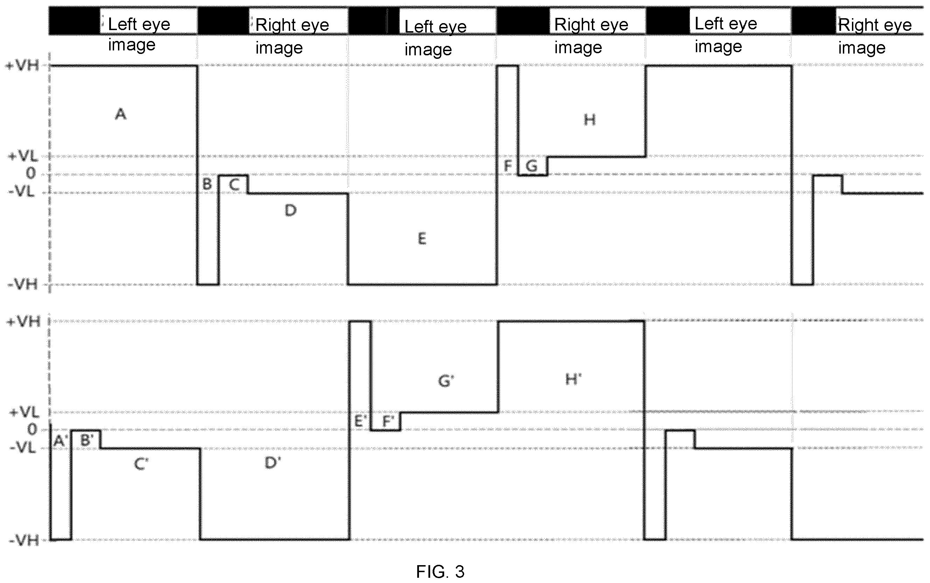

According to the driving principle described above, the first embodiment provides three drive waveforms applicable to the driving circuit 4, as shown in FIG. 3, FIG. 5 and FIG. 6 respectively, in this embodiment, a duration of a driving waveform for one left eye image plus the duration of the driving waveform for one right eye image is defined as one cycle period, each cycle period includes four delay stages, and the upper waveform and the lower waveform in FIG. 3, FIG. 5 and FIG. 6 represent driving waveforms for the two optical self-compensated bend liquid crystal devices, respectively which are described in detail in the following.

Regarding the first driving waveform, the voltages corresponding to the same delay stage in two adjacent cycle periods are opposite to each other. Referring to FIG. 3, the driving circuit 4 is used to generate at least 5 voltages: a positive high voltage +VH, a positive low voltage +VL, a zero voltage, a negative high voltage -VH and a negative low voltage -VL.

In a preceding cycle period of the two adjacent cycle periods, the driving circuit 4 drives the first optical self-compensated bend liquid crystal device 2 or the second optical self-compensated bend liquid crystal device 3 with the positive high voltage +VH in the first delay stage A/H', drives the first optical self-compensated bend liquid crystal device 2 or the second optical self-compensated bend liquid crystal device 3 with the negative high voltage -VH in the second delay stage B/A', drives the first optical self-compensated bend liquid crystal device 2 or the second optical self-compensated bend liquid crystal device 3 with the zero voltage in the third delay stage C/B', and drives the first optical self-compensated bend liquid crystal device 2 or the second optical self-compensated bend liquid crystal device 3 with the negative low voltage -VL in the fourth delay stage D/C'.

In a subsequent cycle period of the two adjacent cycle periods, the driving circuit 4 drives the first optical self-compensated bend liquid crystal device 2 or the second optical self-compensated bend liquid crystal device 3 with the negative high voltage -VH in the first delay stage E/D', drives the first optical self-compensated bend liquid crystal device or the second optical self-compensated bend liquid crystal device with the positive high voltage +VH in the second delay stage F/E', drives the first optical self-compensated bend liquid crystal device or the second optical self-compensated bend liquid crystal device with the zero voltage in the third delay stage G/F', and drives the first optical self-compensated bend liquid crystal device or the second optical self-compensated bend liquid crystal device with the positive low voltage +VL in the fourth delay stage H/G'.

In the driving waveform of FIG. 3, the second delay stage B, F, A', E' is a reverse charging stage; the third delay stage C, G, B', F' is a zero potential stage. When the voltage across the liquid crystal layer is switched from VH to a low voltage VL or -VL, a reverse voltage -VH is firstly applied across the liquid crystal layer for a period of time for reverse charging, to reduce the charge on two sides of the liquid crystal layer to about zero at a fastest rate. The liquid crystal molecules in the liquid crystal layer are relaxed from the field-induced nematic phase state in the original high voltage state to a bend state at zero voltage, a relaxation time is related to magnitudes of the high voltages VH and -VH. In other driving manners in the prior art, typically the voltage across the liquid crystal layer is switched directly from a high voltage to a low voltage, since the liquid crystal layer still has potential under such driving manner, i.e., a low voltage electric field is present across the liquid crystal layer, a relaxation rate of the liquid crystal molecules from an arrangement state to the bend state is slower. In this embodiment, after the reverse charging stage, a zero potential stage is applied to accelerate the transition of liquid crystal molecules from the field-induced nematic phase state to the bend state. When the arrangement state of the liquid crystal moleculars approaches the bend state, the voltage across the liquid crystal layer is switched from zero volt to a low voltage, D, H, C, G' in FIG. 3 are low voltage stages, and the low voltages are used to keep two thirds of the retardation of the two optical self-compensated bend liquid crystal devices being in the range of 100-150 nm.

In summary, each cycle period of the driving waveform in FIG. 3 can be substantially divided into the following stages in the following table:

|  | | Name | Symbol in waveform | Duration | Function | Approximate voltage |
|---|---|---|---|---|---|---|
| | 1 | First delay stage: high voltage stage | A/E D'/H' | 1 frame | Maintaining liquid crystal device delay near zero | Usually greater than 12V |
| | 2 | Second delay stage: reverse charge stage (or discharge stage) | B/F A'/E' | Depends on charge current and capacitance | Rapidly reduce the charge across the liquid crystal layer to zero | VH |
| | 3 | Third delay stage: zero potential stage | C/G B'/F' | 10~300us | Accelerate the relaxation process of liquid crystal molecules to the bend state | 0 V |
| | 4 | Fourth delay stage: low voltage stage | D/H C'/G' | The remaining time in a frame except reverse charge time and zero potential time | Keeping the retardation of the liquid crystal layer at about 1/4 wavelength | about 0.5~4V |

In the above 4 stages, the liquid crystal molecules are in motion during the reverse charge stage and the zero potential stage, and the retardation of the liquid crystal layer is neither close to zero nor to quarter wavelength, so an elliptical polarization state will appear during these two stages if light passes through, and significant cross-talk of the left and right eye images will appear after the light passes through circularly polarized 3D glasses. Thus, in practice, no light emits from the projector lens in these two stages, as shown in FIG. 3, the projector does not project light beam during a preset duration before the start of the left eye beam and the right eye beam in each frame, which is represented by a black color in front of the left image and the right eye image in each frame in FIG. 3, and which is called dark time.

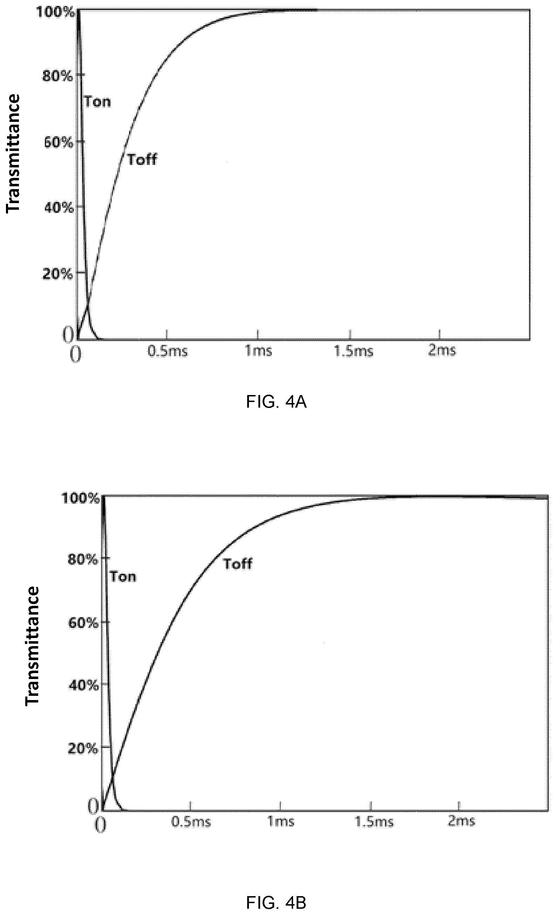

The introduction of the reverse charge stage and the zero potential stage shortens the discharge time of the parasitic capacitance and the relaxation time of the liquid crystal molecules from the field-induced nematic phase state to the bend state. Therefore, a descent time (the transition time from high voltage state to low voltage state) of the liquid crystal device can be greatly shortened. By comparing the optical response curves in FIG. 4A and FIG. 4B, it can be seen that the descent time of the first driving mode is significantly faster than the driving manner without reverse charge stage and zero potential stage.

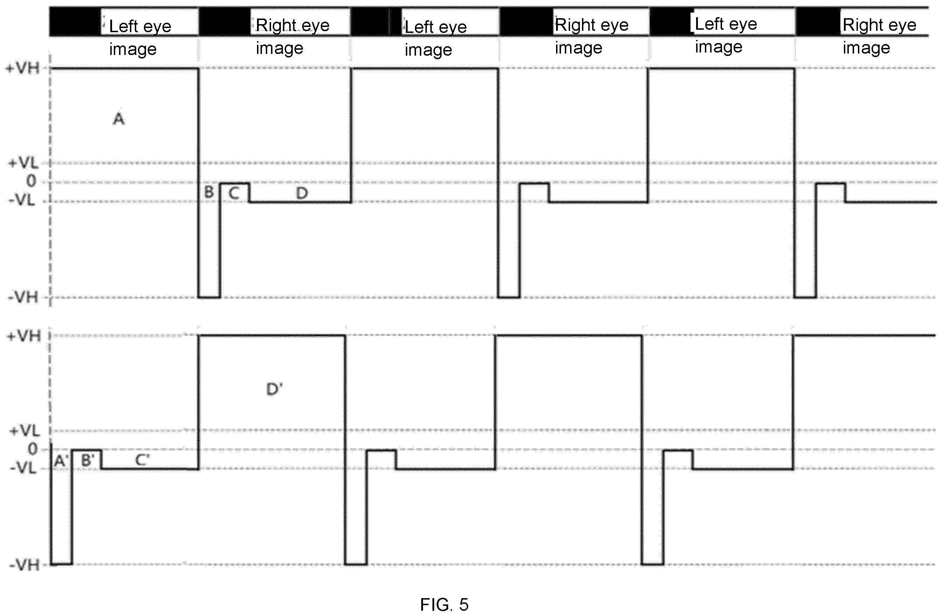

**The second driving waveform** - the voltages corresponding to the same delay stage are the same at each cycle period. As shown in FIG. 5, the driving circuit 4 is configured to provide at least 4 voltages: a positive high voltage +VH, a zero voltage, a negative high voltage -VH and a negative low voltage -VL. In each cycle period, the driving circuit 4 drives the first optical self-compensated bend liquid crystal device 2 or the second optical self-compensated bend liquid crystal device 3 with the positive high voltage +VH in the first delay stage A/D', drives the first optical self-compensated bend liquid crystal device 2 or the second optical self-compensated bend liquid crystal device 3 with the negative high voltage -VH in the second delay stage B/A', drives the first optical self-compensated bend liquid crystal device 2 or the second optical self-compensated bend liquid crystal device 3 with the zero voltage in the third delay stage C/B', and drives the first optical self-compensated bend liquid crystal device or the second optical self-compensated bend liquid crystal device with the negative low voltage -VL in the fourth delay stage D/C'. Similar to the first driving manner, the first delay stage corresponds to a high voltage stage, the second delay stage is a reverse charge stage or a discharge stage, the third delay stage is a zero potential stage and the fourth delay stage is a low voltage stage, details of the working principle of each stage please refer to the descriptions of the first driving waveform, and will not be repeated.

**The third driving waveform** - in the basis of the first driving waveform, in each cycle period, prior to the first delay stage, when driven by the driving circuit 4, the liquid crystal material in the first optical self-compensated bend liquid crystal device 2 and the second optical self-compensated bend liquid crystal device 3 is further in an overvoltage driving stage corresponding to an extra-high voltage.

A sum of durations of the overvoltage driving stage and the first delay stage is equal to the sum of durations of the second delay stage, the third delay stage and the fourth delay stage. Under driven, when one of the first self-compensated bend liquid crystal device 2 and the second optical self-compensated bend liquid crystal device 3 undergoes the overvoltage driving stage and the first delay stage in sequence, the other undergoes the second delay stage, the third delay stage and the fourth delay stage in sequence.

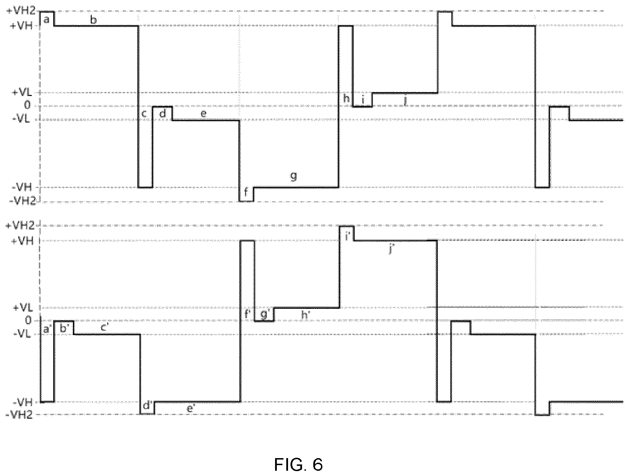

Referring to FIG. 6, the driving circuit 4 is configured to further generate a positive overvoltage +VH2 and a negative overvoltage -VH2 in addition to the five voltages described above.

In a preceding cycle period of two adjacent cycle periods, the driving circuit 4 drives the first optical self-compensated bend liquid crystal device 2 or the second optical self-compensated bend liquid crystal device 3 with the positive overvoltage +VH2 in the overvoltage driving stage a/i';

In a subsequent cycle period of two adjacent cycle periods, the driving circuit 4 drives the first optical self-compensated bend liquid crystal device 2 or the second optical self-compensated bend liquid crystal device 3 with the negative overvoltage -VH2 in the overvoltage driving stage f/d.

By introducing the overvoltage driving stage, the third drive waveform applies a voltage VH2 higher than the high voltage VH to the liquid crystal device and can further shorten the rising time of the liquid crystal device.

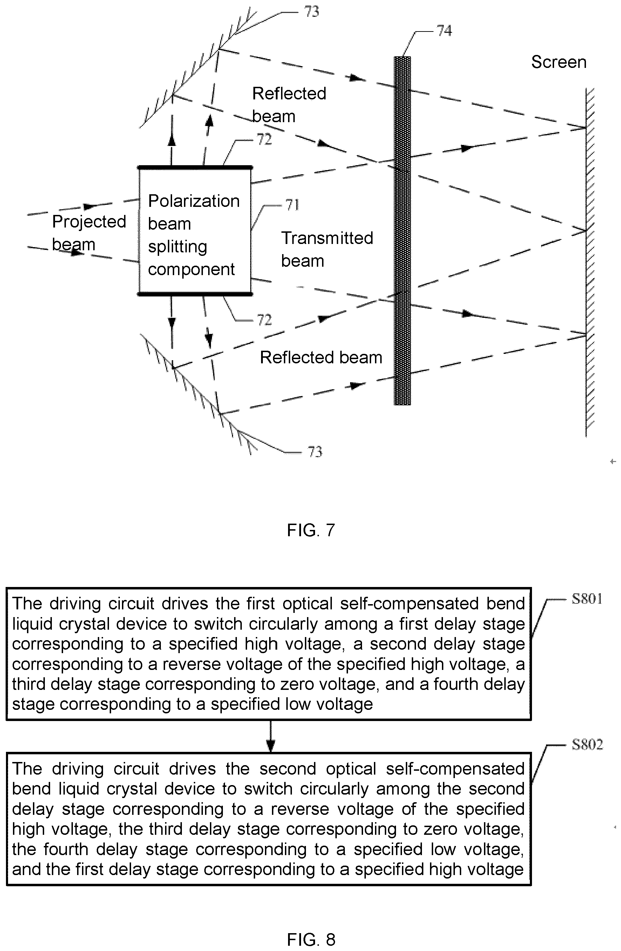

As shown in FIG. 7, the second embodiment of the present invention also provides a 3D projection light modulation system comprising: a polarization beam splitting component 71, a polarization plane rotating component 72, the polarization plane rotating component 73, an optical path direction adjusting component 74 and a liquid crystal phase modulation component 75.

The light modulation system provided in this second embodiment needs to be used in conjunction with a projector and a screen, and is placed between the projector and the screen. In particular, the projector is configured to project alternately a left-eye light beam carrying left-eye image information and a right-eye light beam carrying right-eye image information, the left-eye light beam and the right-eye light beam projected by the projector are natural light without polarization characteristics. In order to achieve 3D effect, the light modulation system provided by the second embodiment is required to deflect the projected beam and project it to the screen.

Further, for reasons as described above in the first embodiment, to prevent significant left and right eye image crosstalk at the circularly polarized 3D glasses worn by the viewer, it requires no light beam to be projected within a preset duration before the start of each left eye beam and each right eye beam in each frame, the preset duration is equal to the sum of the durations of the second delay stage and the third delay stage.

The polarization beam splitting component 71 is arranged on a light-emergent side of the projector, and is configured to perform polarization beam splitting on each of the left eye beam and the right eye beam to obtain at least two split light beams. One part of the at least two split light beams has a first linear polarization state, and the other part has a second linear polarization state. For example, the beam may be split into a transmitted beam having the first linear polarization state and a reflected beam having the second linear polarization state, wherein the reflected beam may comprise one beam, or two beams as shown in FIG. 7, the two reflected beams consist of an upper half reflected beam and a lower half reflected beam.

The polarization plane rotating component 72 is arranged on the light-emergent side of the polarization beam splitting component 71 and is configured to adjust the at least two split beams to have uniform linear polarization states. In the split beam split by the polarization beam splitting component 71, one part has the first linear polarization state, the other part has the second linear polarization state, in order to uniformly modulate the whole projected beam, it requires that the split beams have uniform linear polarization states. The polarization plane rotating component 72 may be divided into two parts which are placed in the upper and lower reflected light paths respectively. The upper and lower reflected beams having the second linear polarization state can be rotated to have the same first linear polarization state as the transmitted beam. If only one reflected beam is split out, only one polarization plane rotating component 72 is needed. It is also possible to place only one polarization plane rotating component 72 in the transmitted beam, the transmitted beam having the first linear polarization state is rotated by the polarization plane rotating component 72 to have the same second linear polarization state as the upper and lower two beams.

The optical path direction adjusting component 73 is configured to cause the at least two split beams to propagate towards a projection screen by adjusting a propagation direction. In general, the transmitted beam is directed toward the projection screen, and the reflected beam is directed toward other directions, so the propagation direction of the reflected beam needs to be adjusted to propagate toward the projection screen. The number of the optical path direction adjusting components 73 is corresponding to the number of the reflected light beams, only one optical path direction adjusting component 73 is needed when there is only one reflected beam, and the position and the adjustment direction of the optical path direction adjusting component 73 may be controlled.

The liquid crystal phase modulation device 74 uses the quick-response liquid crystal phase modulation device described in the first embodiment above, it is arranged on the light-emergent side of the optical path direction adjusting component 73 and the polarization beam splitting component 71, and is configured to alternately adjust the at least two split beams in two adjacent timing sequences to circularly polarized light rotating in a first direction and circularly polarized light rotated in a second direction. For example, in a first sequence, the at least two split beams are modulated as circularly polarized light rotated in the first direction, and in a second sequence, the at least two split beams are modulated as circularly polarized light rotated in the second direction, the modulated circularly polarized light is projected onto a screen and is reflected by the screen into 3D glasses worn by the user.

A third embodiment of the present invention provides a driving method for a liquid crystal phase modulation device, to drive the quick-response liquid crystal phase modulation device of the first embodiment, the process is shown in FIG. 8, please refer to FIG. 8, the driving method includes steps as follows.

At step S801, the driving circuit drives the first optical self-compensated bend liquid crystal device to switch circularly among a first delay stage corresponding to a specified high voltage, a second delay stage corresponding to a reverse voltage of the specified high voltage, a third delay stage corresponding to zero voltage, and a fourth delay stage corresponding to a specified low voltage.

The relationship among the driving circuit, the first second optical self-compensated bend liquid crystal device and the second optical self-compensated bend liquid crystal device is described in FIG. 1 and the first embodiment. In this embodiment, the duration of the driving waveform for one left eye image plus the duration of the drive waveform for one right eye image is defined as one cycle period. Each cycle period includes four delay stages, and the duration of the first delay stage is equal to the sum of the durations of the second delay stage, the third delay stage and the fourth delay stage. The liquid crystal material is in different arrangements at different delay stages, a delay amount increases gradually during a switching process from the first delay stage to the fourth delay stage. In the first delay stage, the retardations of the first optical self-compensated bend liquid crystal device 2 and the second optical self-compensated bend liquid crystal device 3 are close to zero, in the range of about 0-30 nm. In the fourth delay stage, the retardations of the first optical self-compensated bend liquid crystal device 2 and the second optical self-compensated bend liquid crystal device 3 are close to a quarter wavelength, in the range of about 100-150 nm.

At step S802, the driving circuit drives the second optical self-compensated bend liquid crystal device to switch circularly among the second delay stage corresponding to a reverse voltage of the specified high voltage, the third delay stage corresponding to zero voltage, the fourth delay stage corresponding to a specified low voltage, and the first delay stage corresponding to a specified high voltage.

It can be seen that while one of the first optical self-compensated bend liquid crystal device and the second optical self-compensated bend liquid crystal device is in the first delay stage, the other undergoes the second delay stage, the third delay stage and the fourth delay stage in sequence.

As shown in the table above, the first delay stage is a high voltage stage, the second delay stage is a reverse charge or discharge stage, the third delay stage is a zero potential stage, and the fourth delay stage is a low voltage stage. The introduction of the reverse charge stage and the zero potential stage shortens the discharge time of the parasitic capacitance of the liquid crystal device and the relaxation time of the liquid crystal molecular arrangement from the field-induced nematic phase state to the bend state, and thus it can greatly shorten the falling time (time of transition from the high-voltage state to the low-voltage state) of the liquid crystal device.

Several driving waveforms suitable for the driving circuit 4, shown in FIGs. 3, 5 and 6, respectively, are described below.

Regarding FIG. 3, the voltages corresponding to the same delay stage in two adjacent cycle periods are opposite voltages to each other. The driving circuit is used to generate at least five voltages: a positive high voltage +VH, a positive low voltage +VL, a zero voltage, a negative high voltage -VH and a negative low voltage -VL. In a preceding cycle period of the two adjacent cycle periods, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage. In a subsequent cycle period of the two adjacent cycle periods, the driving circuit drives the first optical self-compensated bend liquid crystal device or the second optical self-compensated bend liquid crystal device with the negative high voltage -VH in the first delay stage, drives the first optical self-compensated bend liquid crystal device or the second optical self-compensated bend liquid crystal device with the positive high voltage +VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the positive low voltage +VL in the fourth delay stage.

Regarding FIG. 5, it is suitable for the case where the voltages corresponding to the same delay stage at each cycle period are the same. The driving circuit is configured to generate at least 4 voltages: a positive high voltage +VH, a zero voltage, a negative high voltage -VH and a negative low voltage -VL. In each cycle period, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage.

Regarding FIG. 6, based on the driving waveform shown in FIG. 3, in each cycle period, prior to the first delay stage, the driving circuit further controls the first optical self-compensated bend liquid crystal device and the second optical self-compensated bend liquid crystal device to be in an overvoltage driving stage corresponding to an extra-high voltage. The driving circuit is configured to generate a positive overvoltage +VH2 and a negative overvoltage -VH2. In a preceding cycle period of two adjacent cycle periods, the driving circuit drives the first optical self-compensated bend liquid crystal device or the second optical self-compensated bend liquid crystal device with the positive overvoltage +VH2 in the overvoltage driving stage. In a subsequent cycle period of two adjacent cycle periods, the driving circuit drives the first optical self-compensated bend liquid crystal device or the second optical self-compensated bend liquid crystal device with the negative overvoltage -VH2 in the overvoltage driving stage. By introducing an overvoltage driving stage, the driving waveform shown in FIG. 6 applies a voltage VH2 higher than the high voltage VH to the liquid crystal device and may further shorten the rising time of the liquid crystal device.

The foregoing descriptions are only better embodiments of the invention and are not intended to limit the present invention. Any modifications, equivalent substitutions and improvements made under the spirit and principle of the invention shall be included within the protection scope of the invention.

**Claims**

1. A quick-response liquid crystal phase modulation device, **characterized by** comprising a first optical self-compensated bend liquid crystal device and a second optical self-compensated bend liquid crystal device attached one another;

     wherein the quick-response liquid crystal phase modulation device further comprises a driving circuit connected to the first optical self-compensated bend liquid crystal device and the second optical self-compensated bend liquid crystal device;
     liquid crystal material of each of the first optical self-compensated bend liquid crystal device and the second optical self-compensated bend liquid crystal device is switched circularly among a first delay stage corresponding to a specified high voltage, a second delay stage corresponding to a reverse voltage of the specified high voltage, a third delay stage corresponding to zero voltage, and a fourth delay stage corresponding to a specified low voltage under driving of the driving circuit, wherein a delay amount increases gradually during a process from the first delay stage to the fourth delay stage.

2. The quick-response liquid crystal phase modulation device according to claim 1, wherein a duration of the first delay stage is equal to a sum of the durations of the second delay stage, the third delay stage and the fourth delay stage, and when driven, one of the first optical self-compensated bend liquid crystal device and the second optical self-compensated bend liquid crystal device is in the first delay stage, the other undergoes the second delay stage, the third delay stage and the fourth delay stage in sequence.

3. The quick-response liquid crystal phase modulation device according to claim 1, wherein a side of the first optical self-compensated bend liquid crystal device for receiving light is further attached to a linearly polarized device, a first angle is defined between a long axis projection direction of liquid crystal molecules in the first optical self-compensated bend liquid crystal device and an absorption axis direction of the linearly polarized device, and a second angle is defined between the long axis projection direction of liquid crystal molecules in the second optical self-compensated bend liquid crystal device and the absorption axis direction of the linearly polarized device, one of the first angle and the second angle is positive 45 degrees and the other is negative 45 degrees;
     the first optical self-compensated bend liquid crystal device and the second optical self-compensated bend liquid crystal device have a retardation of 0-30 nm in the first delay stage, and a retardation of 100-150 nm in the fourth delay stage.

4. The quick-response liquid crystal phase modulation device according to claim 1, wherein voltages corresponding to the same delay stage in two adjacent cycle periods are opposite to each other.

**5.** The quick-response liquid crystal phase modulation device according to claim 4, wherein the driving circuit is configured to generate at least five voltages: a positive high voltage +VH, a positive low voltage +VL, a zero voltage, a negative high voltage -VH and a negative low voltage -VL;

in a preceding cycle period of two adjacent cycle periods, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage;
in a subsequent cycle period of the two adjacent cycle periods, the driving circuit drives the first optical self-compensated bend liquid crystal device or the second optical self-compensated bend liquid crystal device with the negative high voltage -VH in the first delay stage, drives the first optical self-compensated bend liquid crystal device or the second optical self-compensated bend liquid crystal device with the positive high voltage +VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the positive low voltage +VL in the fourth delay stage.

**6.** The quick-response liquid crystal phase modulation device according to claim 1, wherein the voltages corresponding to the same delay stage in each cycle period are the same.

**7.** The quick-response liquid crystal phase modulation device according to claim 6, wherein the driving circuit is configured to generate at least four voltages: a positive high voltage +VH, a zero voltage, a negative high voltage -VH and a negative low voltage -VL;
in each cycle period, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage.

**8.** The quick-response liquid crystal phase modulation device according to anyone of claims 1 to 5, wherein in each cycle period, prior to the first delay stage, when driven by the driving circuit, the liquid crystal materials in the first optical self-compensated bend liquid crystal device and the second optical self-compensated bend liquid crystal device are further in an overvoltage driving stage corresponding to an extra-high voltage;
a sum of durations of the overvoltage driving stage and the first delay stage is equal to a sum of durations of the second delay stage, the third delay stage and the fourth delay stage, and when driven, one of the first self-compensated bend liquid crystal device and the second optical self-compensated bend liquid crystal device undergoes the overvoltage driving stage and the first delay stage in sequence, the other undergoes the second delay stage, the third delay stage and the fourth delay stage in sequence.

**9.** The quick-response liquid crystal phase modulation device according to claim 8, wherein the driving circuit is configured to generate a positive overvoltage +VH2 and a negative overvoltage -VH2;

in a preceding cycle period of two adjacent cycle periods, the driving circuit drives the first optical self-compensated bend liquid crystal device or the second optical self-compensated bend liquid crystal device with the positive overvoltage +VH2 in the overvoltage driving stage;
in a subsequent cycle period of two adjacent cycle periods, the driving circuit drives the first optical self-compensated bend liquid crystal device or the second optical self-compensated bend liquid crystal device with the negative overvoltage -VH2 in the overvoltage driving stage.

**10.** A 3D projection light modulation system, comprising:

a polarization beam splitting component, configured to perform polarization beam splitting on a left eye beam and a right eye beam which are projected alternately, to obtain at least two split light beams, one part of the at least two split light beams having a first linear polarization state, and the other part having a second linear polarization state; wherein the left eye beam carries a left eye image information, and the right eye beam carries a right eye image information;

a polarization plane rotating component, arranged on a light-emergent side of the polarization beam splitting component, and configured to adjust the at least two split beam to have uniform linear polarization states;

an optical path direction adjusting component, arranged on a light-emergent side of the polarization beam splitting component, and configured to cause the at least two split beams to propagate towards a projection screen by adjusting a propagation direction; and

the quick-response liquid crystal phase modulation device according to anyone of claims 1 to 9, which is arranged on a light-emergent side of the polarization beam splitting component, and configured to adjust the at least two split beams in two adjacent timing sequences to circularly polarized light rotating in a first direction and circularly polarized light rotated in a second direction alternately.

11. The 3D projection light modulation system according to claim 10, wherein no left eye beam and no right eye beam are projected within a preset duration before the start of the left eye beam and the right eye beam in each frame, the preset duration is equal to a sum of the durations of the second delay stage and the third delay stage.

12. A driving method for the quick-response liquid crystal phase modulation device according to claim 1, wherein the method comprising simultaneously driving the first optical self-compensated bend liquid crystal device and the second optical self-compensated bend liquid crystal device, which comprises:

driving the first optical self-compensated bend liquid crystal device to switch circularly among a first delay stage corresponding to a specified high voltage, a second delay stage corresponding to a reverse voltage of the specified high voltage, a third delay stage corresponding to zero voltage, and a fourth delay stage corresponding to a specified low voltage, by using the driving circuit;

driving the second optical self-compensated bend liquid crystal device to switch circularly among the second delay stage corresponding to a reverse voltage of the specified high voltage, the third delay stage corresponding to zero voltage, the fourth delay stage corresponding to a specified low voltage, and the first delay stage corresponding to a specified high voltage, by using the driving circuit;

wherein a duration of the first delay stage is equal to a sum of the durations of the second delay stage, the third delay stage and the fourth delay stage, when one of the first optical self-compensated bend liquid crystal device and the second optical self-compensated bend liquid crystal device is in the first delay stage, the other undergoes the second delay stage, the third delay stage and the fourth delay stage in sequence; a delay amount increases gradually during a switching process from the first delay stage to the fourth delay stage.

13. The driving method, according to claim 12, wherein voltages corresponding to the same delay stage in two adjacent cycle periods are reverse voltages; the driving circuit is configured to generate at least five voltages: a positive high voltage +VH, a positive low voltage +VL, a zero voltage, a negative high voltage -VH and a negative low voltage -VL;

in a preceding cycle period of two adjacent cycle periods, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage;

in a subsequent cycle period of the two adjacent cycle periods, the driving circuit drives the first optical self-compensated bend liquid crystal device or the second optical self-compensated bend liquid crystal device with the negative high voltage -VH in the first delay stage, drives the first optical self-compensated bend liquid crystal device or the second optical self-compensated bend liquid crystal device with the positive high voltage +VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the positive low voltage +VL in the fourth delay stage.

14. The driving method according to claim 12, wherein voltages corresponding to the same delay stage in each cycle period are the same; the driving circuit is configured to generate at least four voltages: a positive high voltage +VH, a zero voltage, a negative high voltage -VH and a negative low voltage -VL;

in each cycle period, the driving circuit drives the first optical self-compensated bend liquid crystal device or the second optical self-compensated bend liquid crystal device with the positive high voltage +VH in the first delay stage, drives the first optical self-compensated bend liquid crystal device or the second optical self-compensated bend liquid crystal device with the negative high voltage -VH in the second delay stage, drives the first optical self-compensated bend liquid crystal device or the second optical self-compensated bend liquid crystal device with the zero voltage in the third delay stage, and drives the first optical self-compensated bend liquid crystal device or the second optical self-compensated bend liquid crystal device with the negative low voltage -VL in the fourth delay stage.

15. the driving method according to claim 12 or 13, wherein in each cycle period, prior to the first delay stage, the driving circuit further controls the first optical self-compensated bend liquid crystal device and the second optical self-compensated bend liquid crystal device to be in an overvoltage driving stage corresponding to an extra-high voltage; the driving circuit is configured to generate a positive overvoltage +VH2 and a negative overvoltage -VH2;

in a preceding cycle period of two adjacent cycle periods, the driving circuit drives the first optical self-compensated bend liquid crystal device or the second optical self-compensated bend liquid crystal device with the positive overvoltage +VH2 in the overvoltage driving stage;

in a subsequent cycle period of the two adjacent cycle periods, the driving circuit drives the first optical self-compensated bend liquid crystal device or the second optical self-compensated bend liquid crystal device with the negative overvoltage -VH2 in the overvoltage driving stage.

1 2 3

Driving circuit

FIG. 1

0V                    VL                    VH

FIG. 2A              FIG. 2B              FIG. 2C

FIG. 3

FIG. 4A

FIG. 4B

FIG. 5

FIG. 6

FIG. 7

| The driving circuit drives the first optical self-compensated bend liquid crystal device to switch circularly among a first delay stage corresponding to a specified high voltage, a second delay stage corresponding to a reverse voltage of the specified high voltage, a third delay stage corresponding to zero voltage, and a fourth delay stage corresponding to a specified low voltage | S801 |

↓

| The driving circuit drives the second optical self-compensated bend liquid crystal device to switch circularly among the second delay stage corresponding to a reverse voltage of the specified high voltage, the third delay stage corresponding to zero voltage, the fourth delay stage corresponding to a specified low voltage, and the first delay stage corresponding to a specified high voltage | S802 |

FIG. 8

## INTERNATIONAL SEARCH REPORT

| | International application No. |
|---|---|
| | **PCT/CN2020/126572** |

### A. CLASSIFICATION OF SUBJECT MATTER

G03B 35/16(2021.01)i;  G02F 1/13(2006.01)i

According to International Patent Classification (IPC) or to both national classification and IPC

### B. FIELDS SEARCHED

Minimum documentation searched (classification system followed by classification symbols)

G03B; G02B; G02F

Documentation searched other than minimum documentation to the extent that such documents are included in the fields searched

Electronic data base consulted during the international search (name of data base and, where practicable, search terms used)

CNABS; CNTXT; VEN: 李艳龙, 反向充电, 立体, 三维, "3D", 补偿, 弯曲, 调制, 快门, 眼镜, 相位, 偏振, 延迟, 波, 电压, REALD, OCB, optical compensated bend, optical self compensated bend, Pi, π, compensate+, glasses, modulat+, polariz+, phase, delay, wave?, pulse, voltage

### C. DOCUMENTS CONSIDERED TO BE RELEVANT

| Category* | Citation of document, with indication, where appropriate, of the relevant passages | Relevant to claim No. |
|---|---|---|
| PX | CN 210514858 U (SHENZHEN DYON TECHNOLOGY CO., LTD.) 12 May 2020 (2020-05-12)<br>description, paragraphs [0027]-[0060], and figures 1-6 | 1-15 |
| Y | CN 202453645 U (SHENZHEN TIMEWAYING TECHNOLOGY CO., LTD.) 26 September 2012 (2012-09-26)<br>description, paragraphs 31-50, figures 1-4B | 1-15 |
| Y | CN 103180780 A (REALD INC.) 26 June 2013 (2013-06-26)<br>description, paragraphs 27-42, figure 4 | 1-15 |
| Y | CN 208999731 U (SHENZHEN DYON TECHNOLOGY CO., LTD.) 18 June 2019 (2019-06-18)<br>description, paragraphs 39-77, and figures 1-6 | 10-15 |
| A | CN 102566249 A (SHENZHEN AV-DISPLAY CO., LTD.) 11 July 2012 (2012-07-11)<br>entire document | 1-15 |
| A | CN 101950100 A (CPT DISPLAY TECHNOLOGY (FUJIAN) LTD. et al.) 19 January 2011 (2011-01-19)<br>entire document | 1-15 |

☑ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 January 2021** | **03 February 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/126572**

**C.    DOCUMENTS CONSIDERED TO BE RELEVANT**

| Category* | Citation of document, with indication, where appropriate, of the relevant passages | Relevant to claim No. |
|---|---|---|
| A | JP 2001075044 A (IDEMITSU KOSAN CO.) 23 March 2001 (2001-03-23)<br>entire document | 1-15 |

Form PCT/ISA/210 (second sheet) (January 2015)

21

**INTERNATIONAL SEARCH REPORT**
Information on patent family members

International application No.

**PCT/CN2020/126572**

| Patent document cited in search report | | | Publication date (day/month/year) | Patent family member(s) | | | Publication date (day/month/year) |
|---|---|---|---|---|---|---|---|
| CN | 210514858 | U | 12 May 2020 | None | | | |
| CN | 202453645 | U | 26 September 2012 | None | | | |
| CN | 103180780 | A | 26 June 2013 | US | 8913205 | B2 | 16 December 2014 |
| | | | | WO | 2012054909 | A2 | 26 April 2012 |
| | | | | WO | 2012054909 | A3 | 12 July 2012 |
| | | | | US | 2012099040 | A1 | 26 April 2012 |
| | | | | CN | 103180780 | B | 22 September 2017 |
| CN | 208999731 | U | 18 June 2019 | None | | | |
| CN | 102566249 | A | 11 July 2012 | CN | 102566249 | B | 15 October 2014 |
| | | | | WO | 2013102317 | A1 | 11 July 2013 |
| CN | 101950100 | A | 19 January 2011 | None | | | |
| JP | 2001075044 | A | 23 March 2001 | None | | | |

Form PCT/ISA/210 (patent family annex) (January 2015)